# EUROPÄISCHE PATENTSCHRIFT

(11) **EP 2 465 633 B1**
(45) Veröffentlichungstag und Bekanntmachung des Hinweises auf die Patenterteilung: **19.10.2016**
(21) Anmeldenummer: 12159470.9
(22) Anmeldetag: 04.05.2004
(51) Int. Cl.: B23K 11/30, B23K 11/11, B23K 11/31, B23Q 11/00

(54) **Punktschweißzange für Roboteranwendungen zum Widerstandsschweißen von Werkstücken**
Spot welding pincer for robot applications for resistance welding of workpieces
Pince de soudage par points pour applications robotiques destinées au soudage par résistance de pièces usinées

(30) Priorität: 03.07.2003 AT 10232003
(43) Veröffentlichungstag der Anmeldung: 20.06.2012
(62) Teilanmeldung aus: 04730943.0
(73) Patentinhaber: Fronius International GmbH, 4643 Pettenbach (AT)
(72) Erfinder: Stieglbauer, Walter, 4901 Manning (AT); Weigerstorfer, Günter, 4621 Sipbachzell (AT)
(74) Vertreter: Sonn & Partner Patentanwälte

(56) Entgegenhaltungen:
- DE-A1- 19 819 721
- DE-A1- 19 948 043
- GB-A- 1 559 068

## Beschreibung

Die Erfindung betrifft eine Punktschweißzange für Roboteranwendungen zum Widerstandsschweißen von Werkstücken, insbesondere Blechen, nach dem Oberbegriff des Anspruchs 1, siehe z.B. DE 199 48 043 A1.

Die US 2,678,367 A beschreibt eine Schweißmaschine mit besonders kleinen Zangenarmen.

Die US 4,684,778 A betrifft eine Punktschweißzange mit massiven Schweißzangen.

DE 198 19 721 A1 bezieht sich auf eine Vorrichtung zum mechanischen Fügen von aufeinanderliegenden Fügeteilen. Um die fügeprozessbedingte Aufbiegung der Ausleger einer Rahmenkonstruktion zu vermindern bzw. ganz zu vermeiden, wird vorgeschlagen, dass betätigbare Kraftmittel an einem oder mehreren Auslegern angreifen und eine Kraftkomponente in die Vorrichtung einbringen, die einer fügeprozessbedingten Aufbiegungskraftkomponente der Ausleger entgegengerichtet ist.

Die Aufgabe der vorliegenden Erfindung besteht daher in der Schaffung einer Punktschweißzange für Roboteranwendungen zum Widerstandsschweißen von Werkstücken, bei welcher der Aufbau des Zangenarms möglichst leicht und kompakt sein soll.

Diese Aufgabe wird durch eine oben angeführte Punktschweißzange gelöst, bei der der Zangenarm durch ein Hauptelement gebildet ist, welches durch zumindest eine Zugstrebe oder ein Zugseil vorgespannt ist, welche Zugstrebe oder welches Zugseil auf jener Seite des Hauptelements angeordnet ist, auf der sich die Elektrodenaufnahme erstreckt. Damit wird in vorteilhafter Weise erreicht, dass durch die Anordnung der Wickelvorrichtung im Grundkörper oder aber auch an den Zangenarmen ein wesentlich vereinfachtes Wechseln der Wickelvorrichtung sowie auch des Bandes erreicht wird. Von Vorteil ist auch die wesentlich bessere Zugänglichkeit der Elektrodenaufnahme sowie der Elektrode zu komplizierten Werkstücken oder Blechen, da durch die schlanke Ausführung der Elektrodenaufnahme sowie der Elektrode eben diese leichter erreicht werden. Vorteilhaft ist hierbei, dass das Hauptelement des Zangenarms wesentlich kleiner dimensioniert werden kann, da durch die vorgespannten Zugstreben oder einem Zugseil ein Großteil der auf den Zangenarm wirkenden Kräfte aufgenommen werden kann.

Weitere Ausbildungen sind in den Unteransprüchen 2 bis 6 beschrieben. Die sich ergebenden Vorteile können aus der Beschreibung entnommen werden.

Die vorliegende Erfindung wird anhand der beigefügten Zeichnungen näher erläutert.

Darin zeigen:
Fig.1 eine perspektivische Ansicht einer Punktschweißzange;
Fig.2 eine perspektivische Ansicht einer anderen Ausführungsform eines Zangenarms;
Fig.3 eine Schnittdarstellung des Zangenarms entlang der Schnittlinie III-III in Fig.2;
Fig.4 eine perspektivische Ansicht einer weiteren Ausführungsform eines Zangenarms;
Fig.5 wiederum eine Schnittdarstellung des in Fig.4 dargestellten Zangenarms entlang der in Fig.4 dargestellten Schnittlinie V-V;
Fig.6 eine perspektivische Ansicht einer weiteren Ausführungsform eines Zangenarms;
Fig.7 eine Schnittdarstellung eines Zangenarms entlang der Schnittlinie VII-VII in Fig.6;
Fig.8 eine perspektivische Ansicht einer weiteren Ausführungsform eines Zangenarms;
Fig.9 wiederum eine Schnittdarstellung entlang der Schnittlinie IX-IX gemäß Fig.8;
Fig.10 und 11 perspektivische Ansichten erfindungsmäßiger Punktschweißzangen.

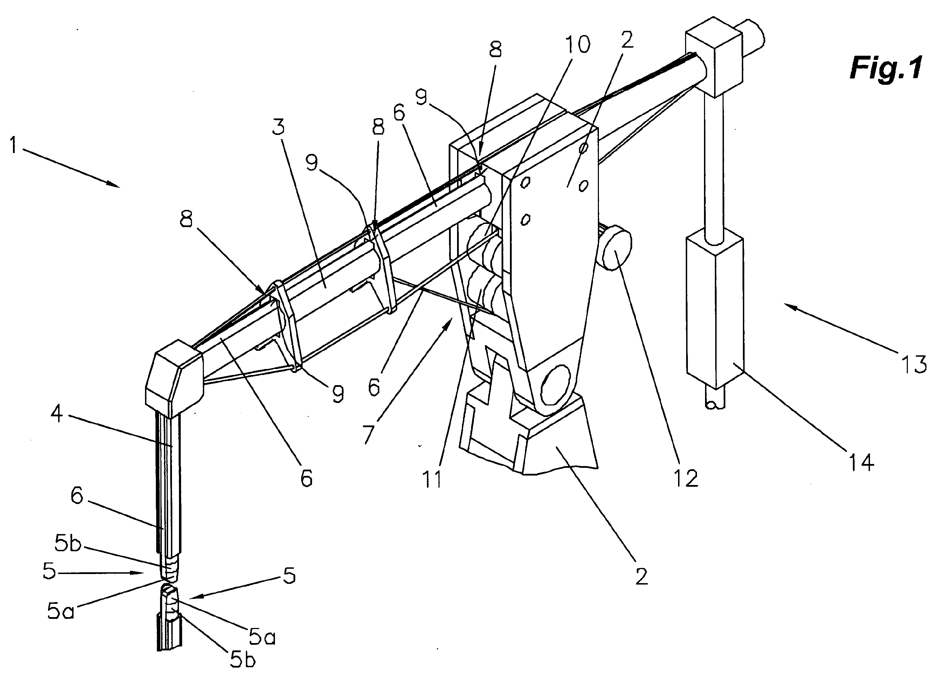

In Fig.1 ist eine Punktschweißzange 1 für Roboteranwendungen zum Widerstandsschweißen von Werkstücken, insbesondere Blechen, perspektivisch dargestellt, wobei übersichtshalber nur eine Hälfte der Punktschweißzange dargestellt wurde.

Die Punktschweißzange 1 besteht aus einem Grundkörper 2 und Zangenarmen 3, an welchen Elektrodenaufnahmen 4 und Elektroden 5 angeordnet sind und um welche ein umlaufendes Band 6 zum Schutz der Elektroden 5, läuft. Das Band 6 wird von einer Wickelvorrichtung 7, welche vorzugsweise an dem Grundkörper 2, aber auch an den Zangenarmen 3 angeordnet sein kann, abgerollt und entlang der Zangenarmgeometrie über den Zangenarm 3, die Elektrodenaufnahme 4 und die Elektrode 5 und gegenüberseitig wieder zurück zur Wickelvorrichtung 7 geführt.

Die Elektrode 5 ist speziell für den Einsatz des Bandes 6 aufgebaut. Selbstverständlich ist es aber auch möglich, jede beliebige aus dem Stand der Technik bekannte Elektrode 5 einzusetzen. An der Elektrode 5, die im Inneren des Aufbaus angeordnet ist, ist im Bereich einer Elektrodenkappe ein Distanzhalter 5a und ein Druckelement 5b angeordnet, die in Längsrichtung der Elektrode 5 beweglich mit dieser verbunden sind, wobei das Druckelement 5b eine Kraft auf den Distanzhalter 5a ausübt. Der Distanzhalter 5a und das Druckelement 5b weisen eine Führung für das Band 6 auf, so dass das Band 6 von der Elektrode 5 distanzierbar ist. Der Distanzhalter 5a hebt während oder nach dem Öffnen der Punktschweißzange 1 das Band 6 von der Elektrodenoberfläche bzw. von der Elektrodenkappe ab, wogegen während eines Schweißvorganges, also bei geschlossener Punktschweißzange 1, der Distanzhalter 5a zurück geschoben wird, so dass die Elektrode 5 bzw. die Elektrodenkappe am Band 6 zum Anliegen kommt. Dabei wird zusätzlich aufgrund des Druckelements 5b ein Druck bzw. eine Kraft vom Distanzelement 5a auf das Werkstück bzw. Blech ausgeübt, so dass beispielsweise das prozessbedingte Aufbiegen bzw. Wölben der Bleche bzw. Bauteile verhindert wird. Durch den Einsatz einer derartigen Elektrode 5 bzw. eines derartigen Elektrodenaufbaus wird erreicht, dass das Band 6 bei geöffneter Punktschweißzange 1 nicht direkt an der Elektrodenkappe zum Anliegen kommt, so dass das Band 6 beim Verschieben nicht an der Elektrode 5 reiben kann und somit die Lebensdauer der Elektrode 5 wesentlich erhöht wird.

Damit nunmehr das Band 6 an die Elektrode 5 herangeführt werden kann, sind am Zangenarm 3 und/oder an der Elektrodenaufnahme 4 Vorrichtungen, insbesondere Umlenkrollen und Gleitflächen 9, zum Führen und Umlenken des Bandes 6 angeordnet. Das Band 6 erstreckt sich dabei von einer in der Wickelvorrichtung 7 angeordneten Abspulrolle 10 über Führungsnuten 8 bzw. einem Kanal, der Elektrodenaufnahme 4 zur Elektrode 5 und von dieser wiederum über die Elektrodenaufnahme 4 und über Führungsnuten 8 bzw. einem Kanal zu einer Aufwickelrolle 11, welche wiederum in der Wickelvorrichtung 7 angeordnet ist. Die Abspulrolle 10 und/oder die Aufwickelrolle 11 ist mit einem Antriebsmittel 12, insbesondere einem elektronisch ansteuerbarem Motor, gekoppelt, so dass durch Ansteuerung des Antriebsmittels 12 eine gezielte Verschiebung des Bandes 6 ermöglicht wird.

Die Abspulrolle 10 und Aufwickelrolle 11 ist so konzipiert, dass ein einfacher und unkomplizierter Wechsel bzw. Austausch der Rollen bzw. des Bandes 6 vorgenommen werden kann. Dabei sind die Abspulrolle 10 und die Aufwickelrolle 11 derart im Grundkörper 2 oder im Zangenarm 3 gelagert, dass diese einfach ausgetauscht werden können, wobei beim Einsatz der Abspulrolle 10 und/oder der Aufwickelrolle 11 eine automatische Koppelung mit dem Antriebsmittel 12 hergestellt wird. Durch die Anordnung der Abspulrollen 10 und der Aufwickelrollen 11 sowie des Antriebsmittels 12 am Grundkörper 2 oder aber auch an den Zangenarmen 3 wird erreicht, dass ein leichterer Zugang zu den Spulen gewährleistet ist und dadurch das Auswechseln der Abspulrolle 10 und Aufwickelrolle 11 wesentlich vereinfacht und erleichtert wird. Ein weiterer positiver Effekt dieser Anordnung der Abspulrolle 10 und Aufwickelrolle 11 besteht darin, dass durch die Führung des Bandes 6 von hinten, also von dem Grundkörper 2 zu der Elektrode 5, keine störenden Elemente bzw. Teile vorhanden sind, was zur Folge hat, dass auch bei komplizierten zugänglichen Werkstücken nahezu problemlos eine Punktschweißung durchgeführt werden kann, da keinerlei Einschränkung der Zugänglichkeit gegenüber Schweißzangen ohne Band 6 gegeben ist. Durch diese Ausgestaltung wird auch erreicht, dass die Baugröße der Punktschweißzange 1 gering gehalten werden kann.

Der Vollständigkeit halber wird erwähnt, dass die Zangenarme 3 verstellbar gelagert sind und durch ein Betätigungsmittel 13, welches zum Beispiel durch einen Servomotor oder einen Zylinder 14 gebildet sein kann, verstellt werden.

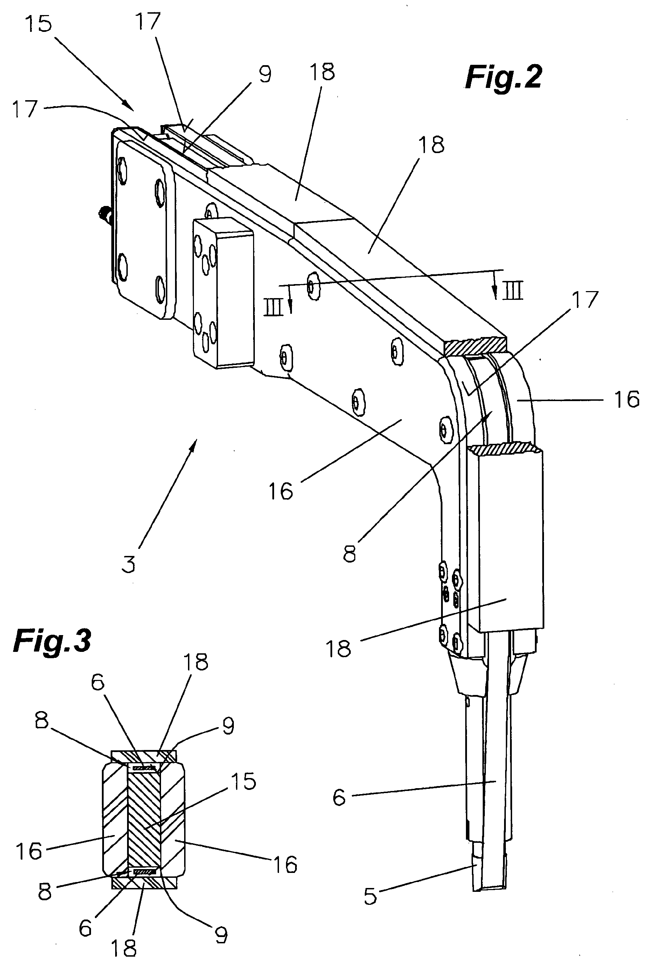

In Fig.2 ist ein Zangenarm 3 einer Punktschweißzange 1 perspektivisch und schematisch vereinfacht und in Fig.3 eine Schnittdarstellung des Zangenarms 3 entlang der Schnittlinie III-III in Fig.2 dargestellt. Die Abspulrolle 10 und die Aufwickelrolle 11 der Wickelvorrichtung 7 sind dabei im nicht dargestellten Grundkörper 2, an dem der Zangenarm 3 befestigt ist, angeordnet.

In dieser Ausführung ist der Zangenarm 3 der Punktschweißzange 1 aus einem Grundprofil 15 gebildet, an welchem beiderseits Seitenteile 16 angeordnet sind, welche über das Grundprofil 15 hinausragen, so dass eine Vertiefung gebildet wird, welche als Führungsnut 8 für das Band 6 dient. Die Seitenteile 16 können aus Aluminium gefertigt werden, wodurch eine enorme Gewichtsersparnis erreicht wird. Natürlich können die Seitenteile 16 aus jedem möglichen anderen Material gefertigt sein. Die Führungsnut 8 ist derart ausgebildet, dass die Fläche, an welcher das Band 6 entlang läuft, als Gleitfläche 9 dient.

An den Stirnseiten 17 der Seitenteile 16 ist bevorzugt eine Abdeckplatte 18 angeordnet, welche die ausgebildete Führungsnut 8 zwischen den Seitenteilen 16 abdeckt. Dadurch wird das Band 6 nicht nur besser geführt, sondern das Band 6 und die Führungsnut 8 sowie die Gleitfläche 9 werden des Weiteren auch noch vor Verschmutzungen jeglicher Art geschützt, da das Band 6 erst ab dem Bereich der Elektrode 5 im "Freien" verläuft.

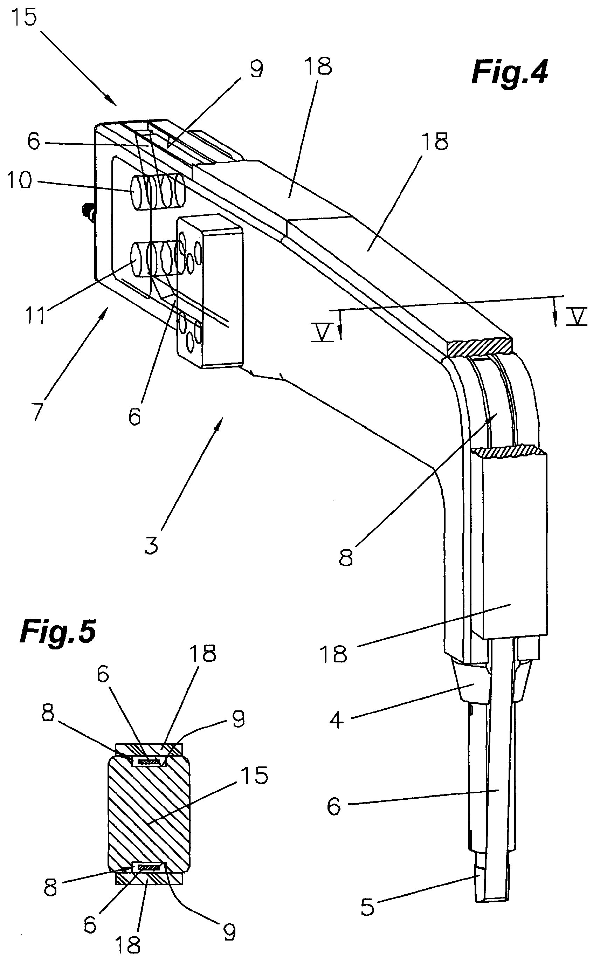

In Fig.4 und 5 ist eine weitere Ausführungsform eines Zangenarms 3 einer Punktschweißzange 1 dargestellt. Die Abspulrolle 10 und die Aufwickelrolle 11 der Wickelvorrichtung 7 sind dabei im Zangenarm 3 integriert. Weiters ist in dem Grundprofil 15 des Zangenarms 3 die Führungsnut 8 eingearbeitet, die sich vom Anfang des Zangenarms 3, also von der Position der Abspulrolle 10 oder Aufwickelrolle 11 bis zur Elektrode 5 erstreckt. Die Führungsnut 8 wird dabei bevorzugt durch Fräsen des Grundprofils 15 gebildet. Dabei ist es möglich, die Führungsnut 8 wieder durch eine Abdeckplatte 18 abzudecken. Bei einer derartigen Konstruktion besteht der Zangenarm 3 nur aus wenigen Teilen.

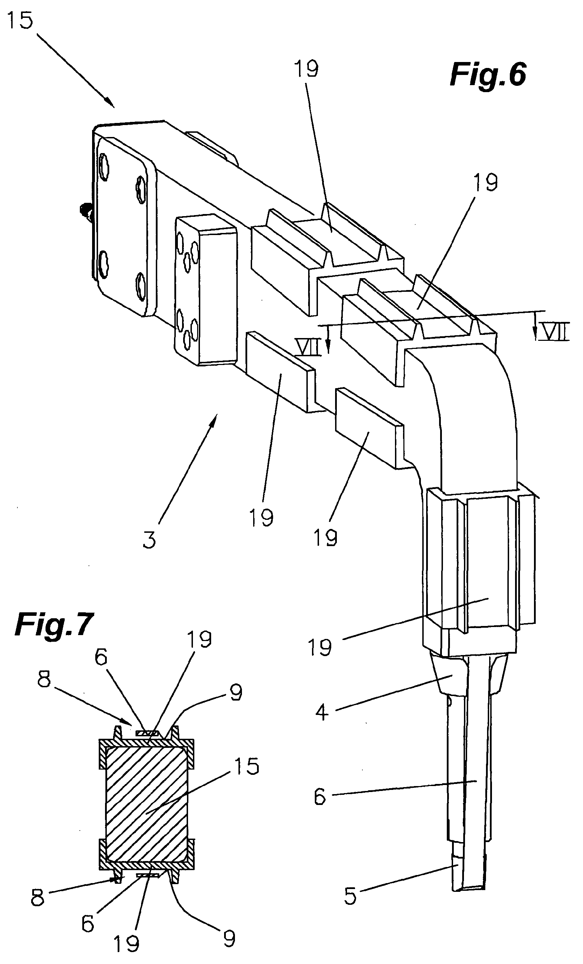

Ein weiteres Ausführungsbeispiel ist in den Fig.6 und 7 gezeigt. Dabei ist die Führungsnut 8 durch zusätzliche Führungselemente 19 gebildet, welche auf dem Zangenarm 3 und/oder auf der Elektrodenaufnahme 4 aufgesteckt oder aufgeschraubt sind. Die Führungselemente 19 sind also als Zusatzbauteile ausgeführt und werden auf dem Grundprofil 15 befestigt. Dadurch können handelsübliche Punktschweißzangen 1 auf ein Bandsystem umgerüstet werden, ohne dass die Zangenarme 3 und/oder die Elektrodenaufnahme 4 getauscht bzw. bearbeitet werden müssen. Die Führungselemente 19 können aus Kunststoff, aber auch aus jedem anderen Material gefertigt sein.

Die Wickelvorrichtung 7, die Abspulrolle 10 und die Aufwickelrolle 11 können ebenfalls als Zusatzelement ausgebildet werden und nachträglich in einfacher Form am Grundkörper 2 bzw. am Zangenarm 3 montiert werden (nicht dargestellt).

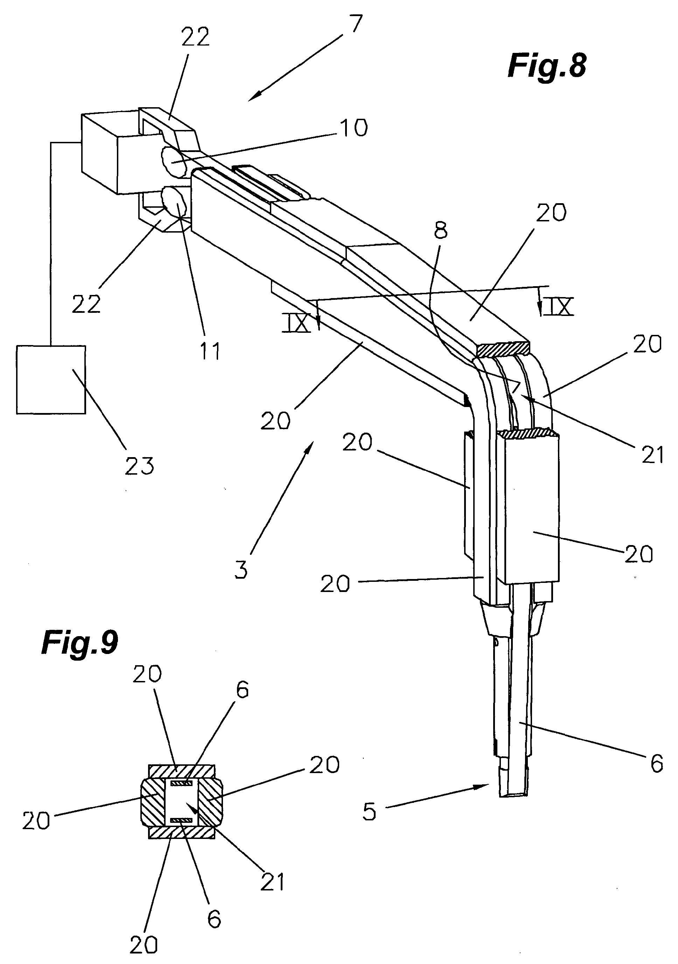

Der Zangenarm 3 kann entsprechend den Fig.8 und 9 auch aus mehreren Einzelteilen 20 gebildet sein, die derart miteinander verbunden werden, dass im Zentrum des Zangenarms 3 ein Hohlraum 21 gebildet wird, in welchem das Band 6 verläuft. Die Einzelteile 20 können entweder zusammengeschraubt oder auch zusammengesteckt sein. Natürlich kann der Zangenarm 3 auch durch ein Profilrohr gebildet sein, an welchem eingearbeitete Führungsnuten 8 sowohl an den Innenseiten des Profilrohres als auch an den Außenseiten des Profilrohres angeordnet sein können.

Bevorzugt ist im Bereich der Abspulrolle 10 und/oder der Aufwickelrolle 11 eine Bremsvorrichtung 22 für das Band 6 angeordnet, welche von einer Steuervorrichtung 23 angesteuert wird und das Band 6 gespannt hält. Damit wird verhindert, dass das Band 6 sich in dem Hohlraum 21 oder in der Führungsnut 8 verkeilt bzw. lose herumhängt. Die Bremsvorrichtung 22 kann dabei ebenfalls bei den zuvor beschriebenen Ausführungsformen verwendet werden, und ist bevorzugt in der Wickelvorrichtung 7 integriert. Auf eine detaillierte Darstellung wird dabei verzichtet, da die Ausbildung auf die unterschiedlichste Weise erfolgen kann. Dabei könnte die Bremsvorrichtung 22 durch zwei zueinander bewegbare Druckelemente gebildet werden, zwischen denen das Band 6 geführt wird, wobei bei aktivierter Bremsvorrichtung 22 diese Druckelemente auf das Band 6 gefahren werden und somit das Band 6 fixiert wird. Die Aufgabe der Bremsvorrichtung 22 liegt also darin, dass diese nach dem Weiterbewegen des Bandes 6 dieses fixiert, so dass das Band 6 immer gespannt ist.

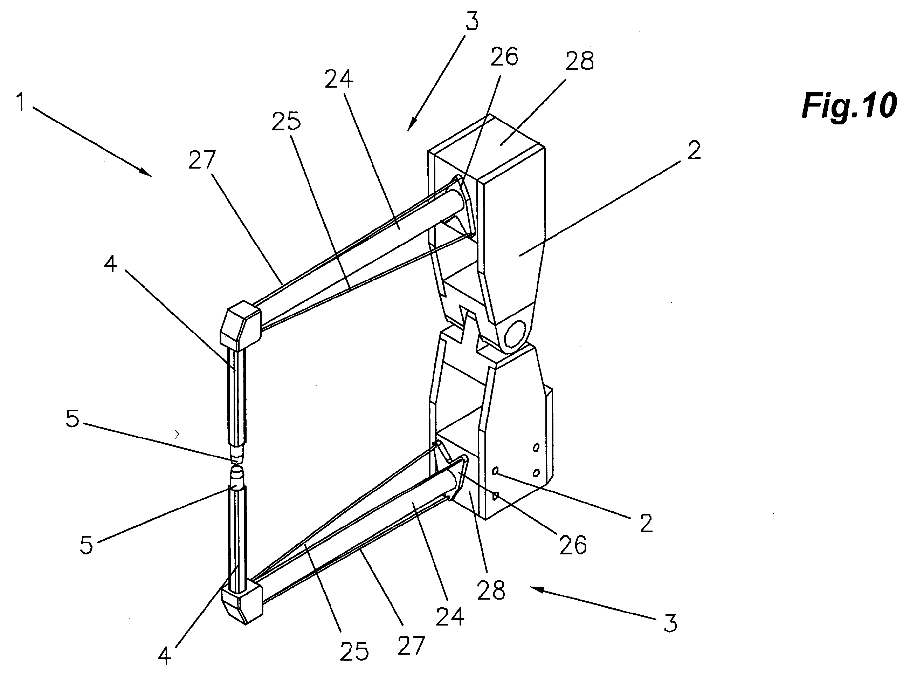

In Fig.10 ist eine Punktschweißzange 1 für Roboteranwendungen zum Widerstandsschweißen von Werkstücken, insbesondere Blechen, perspektivisch dargestellt. An einem Grundkörper 2 sind wiederum schwenkbar gelagerte Zangenarme 3 mit Elektrodenaufnahmen 4 zur Aufnahme der Elektroden 5 befestigt. Die Zangenarme 3 sind über ein Betätigungsmittel 13 (siehe Fig.1) verstellbar. Das Betätigungsmittel 13 kann dabei durch einen Servomotor oder einen Zylinder 14 oder auch jede andere mögliche Betätigungsart gebildet sein.

Bei dieser Punktschweißzange 1 ist ein Hauptelement 24 durch zumindest eine Zugstrebe oder ein Zugseil 25 vorgespannt. Der Zangenarm 3 kann beispielsweise aus einem Hauptelement 24 und zumindest einer am Hauptelement 24 befestigten Halteplatte 26 bestehen. Das Hauptelement 24 ist bevorzugt in Form eines Rundprofils ausgebildet. An einem oder mehreren Punkten der Halteplatte 26 ist eine Zugstrebe oder ein Zugseil 25 befestigt und mit dem Hauptelement 24 verbunden. Die Zugstrebe oder das Zugseil 25 ist auf jener Seite des Hauptelements 24 befestigt, auf welcher sich die Elektrodenaufnahme 4 erstreckt. Weiters ist es möglich, dass auf der gegenüberliegenden Seite der Zugstrebe oder des Zugseils 25 eine Haltestrebe bzw. ein Halteseil 27 angeordnet ist.

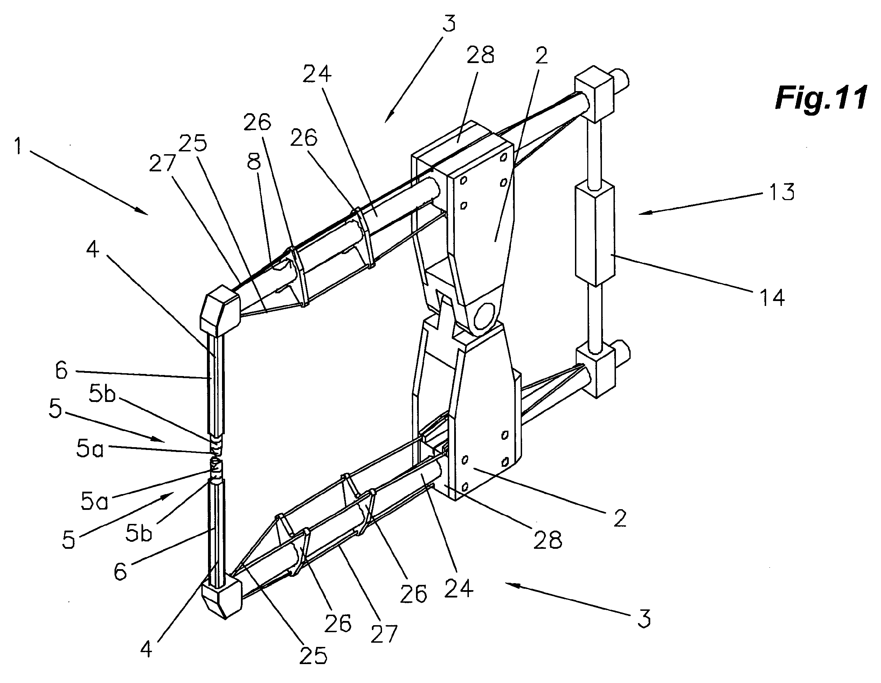

Der Zangenarm 3 wird über die Halteplatte 26 mit dem Grundkörper 2, insbesondere mit einem Aufnahmeelement 28, verbunden. Selbstverständlich ist es möglich, dass die Halteplatte 26 entfallen kann und das Hauptelement 24 sowie das Zugseil 25 und gegebenenfalls das Halteseil 27 direkt mit dem Aufnahmeelement 28 verbunden wird. Wesentlich ist dabei, dass das Zugseil 25 bzw. das Halteseil 27 auf einer Seite des Hauptelements 24 vom Hauptelement 24 distanziert angeordnet ist und sowohl das Zugseil 25 als auch das Halteseil 27 mit dem Hauptelement 24 oder einem am Hauptelement 24 angeordneten Befestigungselement (nicht dargestellt) verbunden ist. Somit wird nämlich erreicht, dass über das Zugseil 25 und/oder das Halteseil 27 entsprechende Zug- und Haltekräfte auf das Hauptelement 24 des Zangenarms 3 aufgebaut werden können. Hierzu sind die Zugstrebe bzw. das Zugseil 25 und/oder die Haltestrebe bzw. das Halteseil 27 in einem Winkel, bevorzugt zwischen 10° und 30° zum Hauptelement 24 angeordnet, d.h., dass diese zumindest in einem Teilbereich winkelig zur Oberfläche des Hauptelements 24 verlaufen. Es ist nämlich möglich, dass das Zugseil 25 und/oder das Halteseil 27 über einen Teilbereich parallel zur Oberfläche des Hauptelements 24 geführt werden, wobei jedoch im Verbindungsbereich diese winkelig verlaufen, wie dies beispielsweise in Fig.11 dargestellt ist.

Durch eine derartige Ausbildung des Zangenarms 3 wird erreicht, dass das Hauptelement 24 einen sehr geringen Querschnitt aufweisen kann, da die Druckkräfte der Punktschweißzange 1 über das Zugseil 25 und/oder das Halteseil 27 aufgenommen werden. Somit kann das Gewicht der Punktschweißzange 1 wesentlich verringert werden.

In Fig.11 ist ein weiteres Ausführungsbeispiel mit einem derartigen Zangenarmsystem mit Seilen bzw. Streben gezeigt. Dabei erstreckt sich nunmehr das Hauptelement 24 des Zangenarms 3 über den Grundkörper 2 der Punktschweißzange 1 hinaus, wobei dieser im Grundkörper 2 beweglich gelagert ist bzw. die beiden Grundkörper 2 zueinander beweglich gelagert sind. Der Zangenarm 3 ragt an der gegenüberliegenden Seite, an dem der Elektrodenhalter 4 befestigt ist, über den Grundkörper 2 hinaus und ist im Grundkörper 2 beweglich gelagert, so dass ein Hebel gebildet wird. Der über den Grundkörper 2 hinausragende Teil des Zangenarms 3 ist mit dem Betätigungselement 13 verbunden. Das Betätigungselement 13 kann durch einen Zylinder 14 gebildet werden. Durch ein Verstellen des Zylinders 14 wird der Zangenarm 3 derart verstellt, dass die beiden Elektroden 5 aneinander gepresst werden bzw. voneinander wegbewegt werden.

Bei dem in Fig.11 gezeigten Ausführungsbeispiel sind am Zangenarm 3, insbesondere am Hauptelement 24 mehrere Halteplatten 26 angeordnet, über die das Zugseil 25 und die Haltestrebe bzw. das Halteseil 27 distanziert geführt sind. Das Zugseil 25 ist mit dem Aufnahmeelement 28 am Grundkörper 2 und mit dem Zangenarm 3 befestigt, wogegen das Halteseil 27 vom Endbereich des Zangenarms 3 mit der Elektrodenaufnahme 4 sich auf die gegenüberliegende Seite des Grundkörpers 2 erstreckt und dort mit dem Zangenarm 3 verbunden ist. Dies ist auch bei dem Zugseil 25 möglich.

Bei derartigen Punktschweißzangen 1 ist es wesentlich, dass über das Zugseil 25 und über das Halteseil 27 die Kräfte beim Zusammenpressen der Punktschweißzange 1 aufgenommen werden, so dass das Hauptelement 24 wesentlich kleiner dimensioniert werden kann. Somit wird in einfacher Art und Weise eine sehr wesentliche Gewichtseinsparung erzielt.

Für den Einsatz des Bandes 6 zum Schutz der Elektroden weisen die Halteplatten 26 entsprechende Öffnungen auf, die gleichzeitig als Führungsnut 8 bzw. Kanal verwendet werden. Die Abspulrolle 10 und Aufwickelrolle 11 können im Grundkörper 2 integriert werden (siehe Fig.1).

## Patentansprüche

1. Punktschweißzange (1) für Roboteranwendungen zum Widerstandsschweißen von Werkstücken, insbesondere Blechen, mit an einem Grundkörper (2) schwenkbar gelagerten Zangenarmen (3), welche über ein Betätigungsmittel (13) verstellbar sind, und an welchen Elektrodenaufnahmen (4) für die Elektroden (5) befestigt sind, **dadurch gekennzeichnet, dass** die Zangenarme (3) durch ein Hauptelement (24) gebildet ist, welches durch zumindest eine Zugstrebe oder ein Zugseil (25) vorgespannt ist, welche Zugstrebe oder welches Zugseil (25) auf jener Seite des Hauptelements (24) angeordnet ist, auf der sich die Elektrodenaufnahme (4) erstreckt.

2. Punktschweißzange nach Anspruch 1, **dadurch gekennzeichnet, dass** am Hauptelement (24) jedes Zangenarms (3) zumindest eine Halteplatte (26) angeordnet ist, über welche die zumindest eine Zugstrebe oder das Zugseil (25) vom Hauptelement (24) distanziert geführt ist.

3. Punktschweißzange nach Anspruch 1 oder 2, **dadurch gekennzeichnet, dass** das Hauptelement (24) durch ein Rundprofil gebildet ist.

4. Punktschweißzange nach einem der Ansprüche 1 bis 3, **dadurch gekennzeichnet, dass** zusätzlich zu der zumindest einen Zugstrebe oder des Zugseils (25) eine Haltestrebe bzw. ein Halteseil (27) angeordnet ist.

5. Punktschweißzange nach einem der Ansprüche 1 bis 4, **dadurch gekennzeichnet, dass** die zumindest eine Zugstrebe oder das Zugseil (25) und bzw. oder die Haltestrebe oder das Halteseil (27) in einem Winkel zwischen 10° und 30° zum Hauptelement (24) des Zangenarms (3) angeordnet ist.

6. Punktschweißzange nach einem der Ansprüche 1 bis 5, **dadurch gekennzeichnet, dass** die Zugstrebe oder das Zugseil (25) und allenfalls die Haltestrebe oder das Halteseil (27) sich von jener Seite des Hauptelements (24), an der die Elektrodenaufnahme (4) anschließt, bis zur gegenüberliegenden Seite des Grundkörpers (2) am Hauptelement (24) erstreckt.

## Claims

1. Spot welding tongs (1) for robotic applications for the resistance welding of workpieces and, in particular sheet metals, of the type including tong arms (3) which are each pivotally mounted on a base body (2) and adjustable by an actuating means (13) and to which electrode holders (4) for the electrodes (5) are fastened, **characterized in that** the tong arms (3) are each comprised of a main element (24) which is prestressed by at least one drag strut or a drag rope (25), said drag strut or said drag rope (25), being arranged on that side of the main element (24), on which the electrode holder (4) extends.

2. Spot welding tongs according to claim 1, **characterized in that** at least one retaining plate (26) is arranged on the main element (24) of each tong arm (3), via which retaining plate the at least one drag strut or the drag rope (25) is guided in a spaced-apart relationship to the main element (24).

3. Spot welding tongs according to claim 1 or 2, **characterized in that** the main element (24) is formed by a round section.

4. Spot welding tongs according to one of claims 1 to 3, **characterized in that** a holding strut or a holding rope (27) is provided in addition to the at least one drag strut or drag rope (25), respectively.

5. Spot welding tongs according to one of claims 1 to 4, **characterized in that** the at least one drag strut or the drag rope (25), and/or the holding strut or the holding rope (27), are arranged at an angle of between 10° and 30° relative to the main element (24) of the tong arm (3).

6. Spot welding tongs according to one of claims 1 to 5, **characterized in that** the drag strut or the drag rope (25), and optionally the holding strut or the holding rope (27), extend from that side of the main element (24), to which the electrode holder (4) is attached, as far as to the opposite side of the base body (2) on the main element (24).

## Revendications

1. Pince de soudure par points (1) pour des applications robotisées pour la soudure par résistance de pièces, plus particulièrement de tôles, avec des bras de pince (3) logés de manière pivotante au niveau d'un corps de base (2), qui sont réglables par l'intermédiaire d'un moyen d'actionnement (13) et sur lesquels sont fixées des logements d'électrodes (4) pour les électrodes (5), **caractérisée en ce que** les bras de la pince (3) sont constitués d'un élément principal (24), qui est précontraint par au moins un tirant ou un câble de traction (25) du côté de l'élément principal (24) sur lequel s'étend le logement d'électrode (4).

2. Pince de soudure par points selon la revendication 1, **caractérisée en ce que**, sur l'élément principal (24) de chaque bras de la pince (3), se trouve au moins une plaque de maintien (26) par l'intermédiaire de laquelle l'au moins un tirant ou le câble de traction (25) est guidé à une certaine distance par l'élément principal (24).

3. Pince de soudure par points selon la revendication 1 ou 2, **caractérisée en ce que** l'élément principal (24) est constitué d'un profilé rond.

4. Pince de soudure par points selon l'une des revendications 1 à 3, **caractérisée en ce que**, en plus de l'au moins un tirant ou du câble de traction (25), une barre de maintien ou un câble de maintien (27) est disposé

5. Pince de soudure par points selon l'une des revendications 1 à 4, **caractérisée en ce que** l'au moins un tirant ou le câble de traction (25) ou la barre de maintien ou le câble de maintien (27) est disposé avec un angle entre 10° et 30° par rapport à l'élément principal (24) du bras de la pince (3).

6. Pince de soudure par points selon l'une des revendications 1 à 5, **caractérisée en ce que** le tirant ou le câble de traction (25) et, le cas échéant, la barre de maintien ou le câble de maintien (27) s'étend du côté de l'élément principal (24), au niveau duquel est raccordé le logement d'électrode (4), jusqu'au côté opposé du corps de base (2), sur l'élément principal (24).
